# EUROPEAN PATENT APPLICATION

(11) **EP 4 664 744 A1**
(43) Date of publication of application: **17.12.2025**
(21) Application number: 24181040.7
(22) Date of filing: 10.06.2024
(51) Int. Cl.: H02M 7/483, B60L 58/19, B60L 50/64, B60L 50/60, H01M 50/207, H01M 50/298, H01M 50/507, H01M 50/509, H01M 50/55

(54) **BATTERY MODULE**

(71) Applicant: Rimac Technology LLC, 10431 Sveta Nedelja (HR)
(72) Inventor: Norman, Thomas, London, SE26 4BX (GB); Moorhouse, Roger, Witney, OX28 4EW (GB); Perkins, Matthew Lee, Richmond, North Yorkshire, DL10 5DH (GB); Miller, Jack William, Harrogate, HG2 9NJ (GB)
(74) Representative: Hoffmann Eitle

(57) **Abstract**

There is provided a battery module comprising: a housing, a first group of energy source units, wherein the energy source units are arranged in the housing along a first direction and connected in series, a second group of energy source units, wherein the energy source units are arranged in the housing along the first direction and connected in series and a third group of energy source units, wherein the energy source units are arranged in the housing along the first direction and connected in series, wherein the first group of energy source units is configured to output a first output voltage of the battery module for constituting a first phase of an AC signal, wherein the second group of energy source units is configured to output a second output voltage of the battery module for constituting a second phase of the AC signal, and wherein the third group of energy source units is configured to output a third output voltage of the battery module for constituting a third phase of the AC signal.

## Description

### Technical field

The present invention relates to the technical field of battery modules. More specifically, the present invention relates to a battery module and further relates to a battery system for outputting a multilevel output voltage.

### Background

Batteries are playing an increasing role in energy storage for both mobility and grid storage applications. The transition towards using renewable energies is driving a demand for cheaper, longer lasting and more efficient types of batteries.

A battery normally comprises one or more battery modules, and each battery module normally comprises one or more battery cells packed within the available space in the battery module. The battery module can be seen as a physical unit of battery cells arranged within a casing and connected together to form a unit of energy storage.

In automotive and stationary energy storage applications, the battery modules traditionally output a single DC electric output. In some applications in which an AC electric output is needed, for example in some applications in which a three-phase AC output current is needed, three independent battery modules may be used, connected to generate a three-phase AC output current. Each of the three independent battery modules generates a single-phase AC electric output, and the three single phase AC electric outputs have a different phase angle. In some applications in which an AC electric output is needed, for example in some applications in which a three-phase AC output current is needed, a DC source may be used with an external, normally large inverter to generate the three-phase AC output current.

However, these solutions for generating a three-phase AC output current may be inflexible in terms of stacking or arranging the battery modules or in terms of size and architecture of the battery modules and may increase the required space for arranging the battery modules within a battery system. In addition, when using a DC source with traditional external inverter, a large space may be needed for accommodating the large external inverter.

Therefore, there is a need for an improved architecture of a battery module for generating an AC electrical output.

### Summary

The mentioned problems and drawbacks are addressed by the subject matter of the independent claims. Further preferred embodiments are defined in the dependent claims.

In one aspect of the present invention there is provided a battery module comprising: a housing, a first group of energy source units, wherein the energy source units are arranged in the housing along a first direction and connected in series, a second group of energy source units, wherein the energy source units are arranged in the housing along the first direction and connected in series and a third group of energy source units, wherein the energy source units are arranged in the housing along the first direction and connected in series, wherein the first group of energy source units is configured to output a first output voltage of the battery module for constituting a first phase of an AC signal, wherein the second group of energy source units is configured to output a second output voltage of the battery module for constituting a second phase of the AC signal, and wherein the third group of energy source units is configured to output a third output voltage of the battery module for constituting a third phase of the AC signal.

In one aspect of the present invention there is provided a battery system for outputting a multilevel output voltage, the battery system comprising a plurality of battery modules according to the above described one aspect, wherein the plurality of battery modules are connected such that each battery module outputs one level of the multilevel voltage, the battery system comprising further at least one control unit for controlling the plurality of battery modules to output the multilevel output voltage.

### Brief description of the drawings

Embodiments of the present invention, which are presented for better understanding the inventive concepts, but which are not to be seen as limiting the invention, will now be described with reference to the figures in which:
- Figure 1: shows a battery module according to an embodiment of the present invention;
- Figure 2: shows energy storage units in a battery module according to an embodiment of the present invention;
- Figure 3A: shows a battery module according to an embodiment of the present invention;
- Figure 3B: shows battery modules according to an embodiment of the present invention;
- Figure 4: shows a battery module according to an embodiment of the present invention;
- Figure 5: shows a battery module according to an embodiment of the present invention;
- Figure 6: shows a battery module according to an embodiment of the present invention;
- Figure 7: shows a battery module according to an embodiment of the present invention;
- Figure 8: shows a battery system according to an embodiment of the present invention;
- Figure 9: shows a battery module according to an embodiment of the present invention;
- Figure 10: shows features of a battery module according to an embodiment of the present invention;
- Figure 11: shows features of a battery module according to an embodiment of the present invention;

### Detailed description

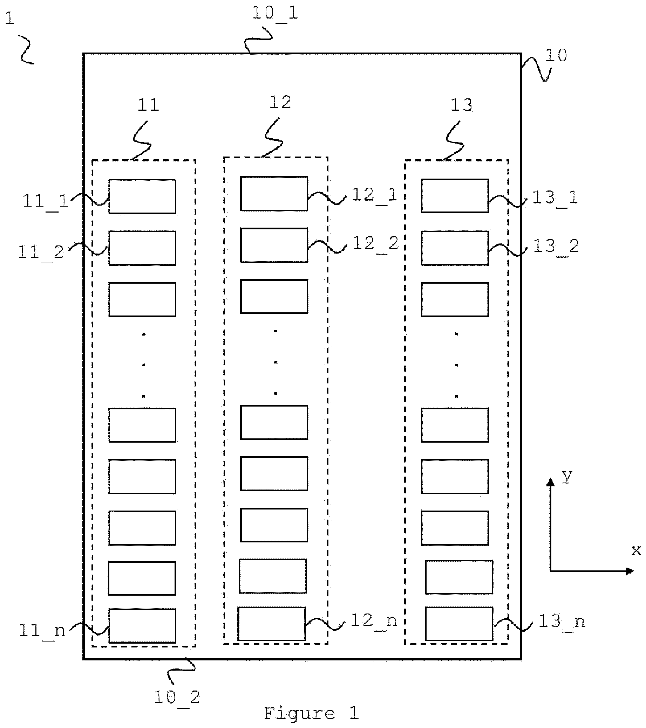

There is shown in figure 1 a battery module 1 according to an embodiment of the present invention. The battery module 1 comprises a housing 10. The battery module 1 comprises further a first group 11 of energy source units 11_1, 11_2, ...11_n. The energy source units 11_1, 11_2,...11_n are arranged in the housing 10 along a first direction (y direction in figure 1) and are connected in series.

The battery module 1 comprises further a second group 12 of energy source units 12_1, 12_2,...12_n. The energy source units 12_1, 12_2,...12_n are arranged in the housing 10 along the first direction and are connected in series.

The battery module comprises further a third group 13 of energy source units 13_1, 13_2,...13_n. The energy source units 13_1, 13_2,...13_n are arranged in the housing 10 along the first direction and are connected in series.

The first group 11 of energy source units 11_1, 11_2,...11_n is configured to output a first output voltage of the battery module 1 for constituting a first phase of an AC signal.

The second group 12 of energy source units 12_1, 12_2, ...12_n is configured to output a second output voltage of the battery module 1 for constituting a second phase of the AC signal.

The third group 13 of energy source units 13_1, 13_2,...13_n is configured to output a third output voltage of the battery module 1 for constituting a third phase of the AC signal.

Hence, according to the embodiment of the present invention, the battery module 1 configured to generate three electrically independent outputs to form the three constituent phases of a three-phase AC current is provided. As elaborated, the battery module 1 is formed of three electrically independent groups of energy storage units 11_1, 11_2,...,11_n, 12_1, 12_2,...,12_n, 13_1, 13_2,13_n, arranged within the housing 10, the energy storage units 11_1, 11_2,...,11_n, 12_1, 12_2,...,12_n, 13_1, 13_2,...,13_n within each of the first group 11, the second group 12 and the third group 13 being connected to each other in series to form a phase cluster. Hence, each of the first group 11, the second group 12 and the third group 13 may also be called a phase cluster here below. In a multi-level inverter architecture in which the battery module 1 may be connected, the voltage built up within a phase cluster 11, 12, 13 of the battery module 1 forms the minimum step voltage of a switching level and the voltage of a phase cluster (for example phase A) of one battery module 1 is cumulated with the voltage of the corresponding cluster (for example phase A) of another battery module 1. Utilising a common neutral point, each of the phase clusters can provide one of three constituent phases of a three-phase AC current.

In the embodiment of the present invention, the battery module 1 is to be understood as a single physical unit. Employing three electrically independent outputs within a single physical unit (i.e., the battery module 1 of the embodiment of the present invention) allows for a flexibility in an energy storage system architecture whereby any number of identical battery modules 1 according to the embodiment of the present invention can be arranged within the energy storage system, depending on the required voltage of the energy storage system and other architectural considerations of the energy storage system. The number of identical battery modules 1 according to the embodiment of the present invention to be arranged within an energy storage system is not limited to multiples of three - as would be the case if each battery module contributes to only a single phase of a three-phase AC current, as elaborated above. As such, the concept of the battery module 1 according to the embodiment of the present invention allows for tailorability of solutions of an energy storage system in terms of both electrical power/energy storage and physical size of the energy storage system.

A corollary of this, is that the concept of the battery module 1 according to the embodiment of the present invention also permits a highly efficient use of space within the energy storage system by using larger battery modules 1. The physical packaging required for individual battery modules, each contributing to only a single phase of a three-phase AC current, would occupy more space, which is important in the implementation of stationary storage applications. An added benefit of this is that, in some configurations, fewer parts are required resulting in a reduced manufacturing and maintenance costs.

The housing 10 may have an elongated shape with a first end surface 10_1 and a second end surface 10_2 arranged to oppose each other along the first direction (y direction in figure 1). The first direction is thus along the longitudinal direction of the housing 10. Preferably, but without being limited thereto, the housing 10 is a rectangular cuboid housing 10.

The first group 11 of energy source units 11_1, 11_2,...11_n may be arranged adjacent, along a second direction (x direction in figure 1), to the second group 12 of energy source units 12_1, 12_2,...12_n and the second group 12 of energy source units 12_1, 12_2,...12_n may be arranged adjacent, along the second direction, to the third group 13 of energy source units 13_1, 13_2,...13_n, .

In one or more embodiments of the present invention, each energy source unit 11_1, 11_2,...,11_n, 12_1, 12_2,...,12_n, 13_1, 13_2,...,13_n may comprise one energy source.

In one or more other embodiments of the present invention, in at least one of the first group 11, the second group 12 and the third group 13, at least one energy source unit 11_1, 11_2,...,11_n, 12_1, 12_2,...,12_n, 13_1, 13_2,...13_n may comprise at least two energy sources. The at least two energy sources may be arranged along the second direction. The second direction may be orthogonal to the first direction. The at least two energy sources may be connected in parallel.

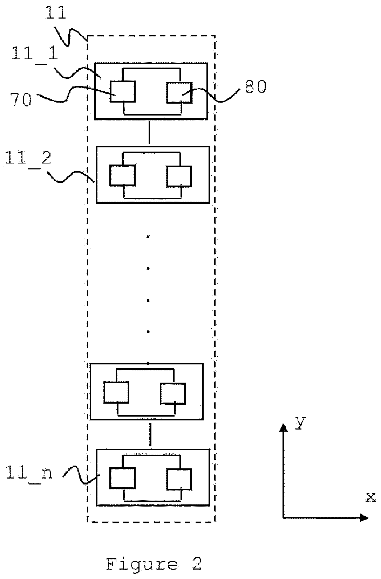

There is shown in figure 2 an embodiment of the present invention in which in the first group 11, each energy source unit 11_1, 11_2,...,11_n comprises two energy sources 70, 80. The same may apply to each of the second group 12 and the third group 13. The two energy sources 70, 80 are arranged along the second direction (x direction in figure 2) and are connected to each other in parallel. The energy source units 11_1, 11_2...11_n are connected in series. It is to be understood that figure 2 showing that each energy source unit 11_1, 11_2,...,11_n comprises two energy sources 70, 80 is for illustrative purposes since at least one energy source unit 11_1, 11_2,...,11_n, 12_1, 12_2,...,12_n, 13_1, 13_2,...13_n may comprise more than two energy sources.

An energy source of each of the energy source units 11_1, 11_2,...,11_n, 12_1, 12_2,..., 12_n, 13_1, 13_2,...,13_n may be any kind of energy source, like for example, but not being limited to, a battery cell, a photovoltaic cell, a fuel cell, an electromechanical power converter or a capacitive energy source. By way of an example, each of the energy sources may be a prismatic battery cell. A prismatic battery cell may have a rectangular shape. By way of a further example each energy source may be a pouch battery cell.

Within the battery module 1, each of the first group 11, the second group 12 and the third group 13 being configured to output the respective one of the first output voltage for constituting the first phase of the AC signal, the second output voltage for constituting the second phase of the AC signal and the third output voltage for constituting the third phase of the AC signal may be understood as each of the first group 11, the second group 12 and the third group 13 being actively switched on/off to output the respective one of the first output voltage, the second output voltage and the third output voltage to represent a part of an alternating waveform AC signal, whereby each of the first group 11, the second group 12 and the third group 13 delivers a phase that is shifted relative to the next phase by 2*π/3. For the actively switching on/off each of the first group 11, the second group 12 and the third group 13, the battery module 1 may comprise at least one electronic unit.

The at least one electronic unit 17 may be arranged in the housing 10 in the space between the first end surface 10_1 and the first group 11 of energy source units, the second group 12 of energy source units and the third group 13 of energy source. The at least one electronic unit 17 may comprise at least one power electronic unit and at least one control electronic unit for each of the first group 11, the second group 12 and the third group 13. By way of example, the at least one electronic unit 17 may comprise at least one power electronic unit and at least one control electronic unit associated with each of the first group 11, second group 12 and third group 13 and arranged in the housing 10 in the space between the first end surface 10_1 and the respective one of the first group 11, the second group 12 and the third group 13.

The power electronic unit may comprise one or more switching elements or switching units. Each of the one or more switching elements or switching units may be a solid-state switching element, like for example a two terminal solid-state switch or a three terminal solid-state switch. Examples of two-terminal solid-state switch include, without limiting the present invention, a PIN (positive-intrinsic-negative) diode and Schottky diode. Examples of a three-terminal solid-state switch include, without limiting the present invention, MOSFET, JFET, IGBT, BJT and thyristor.

The at least one control unit may be any suitable unit or comprise any suitable unit, such as processing unit, that can perform computer processing. The processing unit may comprise any of a micro processing unit (MCU), a field programmable gate array (FPGA) or application specific integrated circuit (ASIC) or a combination thereof. The control unit may comprise at least one storage units such as a memory unit. Alternatively, or additionally, one or more storage units may be provided in addition to the control unit.

The power electronic unit and the control electronic unit may be configured to actively switch on/off each of the first group 11 of energy source units, the second group 12 of energy source units and the third group 13 of energy source units to output the respective one of the first output voltage, the second output voltage and the third output voltage, each to represent a part of an alternating waveform AC signal, whereby each of the first group 11, the second group 12 and the third group 13 delivers a phase that is shifted relative to the next phase by 2*π/3.

In other embodiments of the present invention, the at least one electric unit that may comprise at least one power electronic unit and at least one control electronic unit for each of the first group 11, the second group 12 and the third group 13 may also be external to the battery module 1.

In still other embodiments of the present invention, a distribution of the elements of the at least one electronic unit may be possible. For example, at least one control electronic unit for each of the first group 11, the second group 12 and the third group 13 may be external to the battery module 1 and at least one power electronic unit for for each of the first group 11, the second group 12 and the third group 13 may be arranged in the housing 10 in the space between the first end surface 10_1 and the respective one of the first group 11, the second group 12 and the third group 13. The at least one control electronic unit for each of the first group 11, the second group 12 and the third group 13 arranged external to the battery module 1 may determine the switching pattern and communicate the switching pattern to the respective at least one power electronic unit for each of the first group 11, second group 12 and third group 13 arranged in the housing 10 of the battery module 1. The switching pattern may be seen as the collection of switching states for each of the first group 11 of energy source units, the second group 12 of energy source units and the third group 13 of energy source units at least for a predetermined period of time.

In still other embodiments of the present invention, an external control unit may be provided. The external control unit may be arranged to communicate with the at least one electronic unit 17 that may be arranged in the housing 10 in the space between the first end surface 10_1 and the first group 11 of energy source units, the second group 12 of energy source units and the third group 13 of energy source, or more specifically may be arranged to communicate with each of the at least one control electronic unit for each of the first group 11, the second group 12 and the third group 13. For example, such external control unit may communicate to each of the at least one control electronic unit for each of the first group 11, the second group 12 and the third group 13 the required phase shift to be delivered by the respective group 11, 12, 13.

In one or more embodiments of the present invention, a first output terminal 15 and a second output terminal 16 for each of the first output voltage, the second output voltage and the third output voltage of the respective one of the first group 11 of energy source units, the second group 12 of energy source units and the third group 13 of energy source units may be arranged in the housing 10.

In one or more embodiments of the present invention, the first output terminal 15 and the second output terminal 16 for each of the first output voltage, the second output voltage and the third output voltage of the respective one of the first group 11 of energy source units, the second group 12 of energy source units and the third group 13 of energy source units may be arranged in the space between the first end surface 10_1 of the housing 10 and the respective one of the first group 11 of energy source units, second group of energy source units and third group of energy source units 13.In embodiments of the present invention in which the at least one electronic unit that may comprise at least one power electronic unit and at least one control electronic unit for each of the first group 11, the second group 12 and the third group 13 arranged externally to the battery module 1, the first output terminal 15 and the second output terminal 16 for each of the first output voltage, the second output voltage and the third output voltage may also be arranged externally to the housing 10 of the battery module 1.

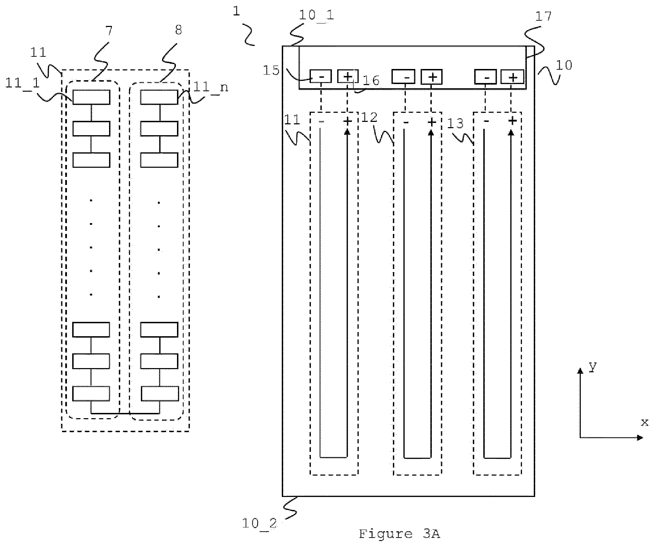

There is shown in figure 3A an embodiment of the present invention in which the first output terminal 15 and the second output terminal 16 for each of the first output voltage, the second output voltage and the third output voltage of the respective one of the first group 11 of energy source units, the second group 12 of energy source units and the third group 13 of energy source units are arranged in the housing 10 in the space between the first end surface 10_1 of the housing 10 and the corresponding one of the first group 11, the second group 12 and the third group 13. In this embodiment of the present invention, the first output terminal 15 and the second output terminal 16 for each of the first output voltage, the second output voltage and the third output voltage are arranged in an alternating manner along the second direction (x direction in figure 3A).

There is further shown in figure 3A, right panel, that the first output terminal 15 and the second output 16 terminal for each of the first output voltage, the second output voltage and the third output voltage and the at least one electronic component 17 are integrated. The skilled person understands that this is a schematic representation and that they do not need to be integrated and can be arranged in the space between the first end surface 10_1 of the housing and the first group 11 of energy source units, the second group 12 of energy source units and the third group 13 of energy source units as separate units depending on the available space and dimensions of the housing 10. It is further to be understood that the at least one electronic component 17 may comprise at least one power electronic unit for each of the first group 11, the second group 12 and the third group 13, while the at least one control electronic unit for each of the first group 11, the second group 12 and the third group 13 may be arranged external to the battery module 1.

In this embodiment of the present invention, in each of the first group 11, the second group 12 and the third group 13, the plurality of energy source units are arranged in a first array (string) 7 and in a second array (string) 8. This is shown in the left panel of figure 3A for the first group 11, however, the sample applies to the second group 12 and the third group 13. The first array 7 extends along the first direction (y direction) and the second array 8 extends along the first direction (y direction). The first array and the second array are adjacent along the second direction. The energy source units of each of the first array 7 and second array 8 which are arranged closest to the second end surface 10_2 of the housing 10 are connected to each other. It is to be understood that at least one energy source unit 11_1, 11_2,...,11_n, 12_1, 12_2,...,12_n, 13_1, 13_2,...13_n may comprise at least two energy sources connected with each other in parallel.

In the battery module 1 in the embodiment described with reference to figure 3A since in each of the first group 11, the second group 12 and the third group 13, the plurality of energy source units are arranged in a first array (string) 7 and in a second array (string) 8, the voltage is built down the length of the battery module 1 towards the back of the battery module 1 before returning to the front of the battery module 1 (front of the battery module 1 being defined with the first end surface 10_1 and back of the battery module 1 being defined with the second end surface 10_2), and hence making an U-turn, such that the at least one electronic component 17 and the first output terminal 15 and the second output terminal 16 for each of the first output voltage, second output voltage and third output voltage are all arranged at the front of the battery module 1.

This linear design allows for scalability of the battery module 1, in terms of dimensions of the battery module 1 and the number of energy storage units 11_1, 11_2,...,11_n, 12_1, 12_2,...,12_n, 13_1, 13_2,...13_n accommodated in the battery module 1 within each of the first group 11, the second group 12 and the third group 13, with little effect on the at least one electronic component 17 and possible other mechanical components of the battery module 1.

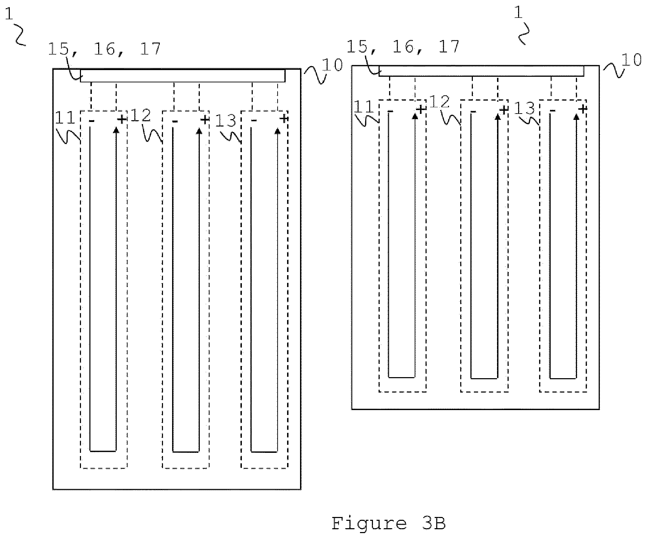

For example, the output voltage of each of the first group 11, the second group 12 and third group 13 can be increased by lengthening the battery module 1. The total energy storage of the battery module 1 can be increased by using larger energy storage units 11_1, 11_2,...,11_n, 12_1, 12_2,...,12_n, 13_1, 13_2,...,13_n and either widening or lengthening the battery module 1. This is shown in figure 3B which shows battery modules 1 according to the embodiment of the present invention, the battery modules 1 having different length. There are many manufacturing methods where this scalability in length of the battery module 1 can be provided with a minimum of re-engineering, for example extrusion or roll-forming. This further permits a degree of flexibility when defining and manufacturing the battery module 1.

The battery module 1, with energy storage units within each of the first group 11, the second group 12 and the third group 13 arranged in two arrays 7, 8 allows that the at least one electronic component 17 is located at one end (for example the front) of the battery module 1. In addition to providing assembly and quality benefits during battery module manufacturing, when battery modules 1 are stacked vertically inside an enclosure (for example to form a battery system), it allows any and all servicing to the at least one electronic component 17, as well as the cooling connections, if provided, to be done with access only required from the one end (for example the front) of the enclosure. As a result, enclosures can be packaged side-to-side and back-to-back to maximise space usage and manufacturing footprint efficiency.

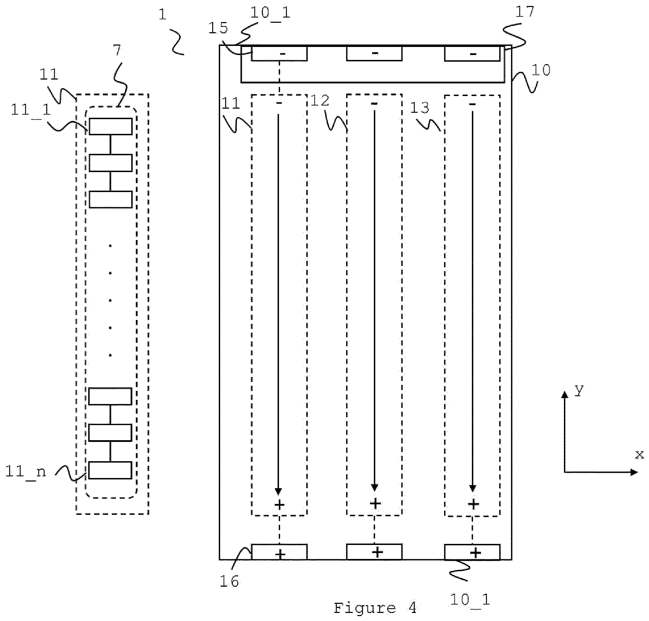

There is shown in figure 4 an embodiment of the present invention in which each of the first output terminal 15 for each of the first output voltage, the second output voltage and the third output voltage is arranged in the housing 10 in the space between the first end surface 10_1 of the housing 10 and the respective one of the first group 11 of energy source units, second group 12 and third group 13 of energy source units. Each of the second output terminal 16 for each of the first output voltage, the second output voltage and the third output voltage is arranged in the housing in the space between the second end surface 10_2 of the housing 10 and the respective one of the first group 11 of energy source units, second group 12 and third group 13 of energy source units. In this embodiment of the present invention the at least one electronic component 17 is arranged in the space between the first end surface 10_1 of the housing 10 and the first group 11 of energy source unts, the second group 12 of energy source units and the third group 13 of energy source units.

There is further shown in figure 4 that the first output terminal 15 for each of the first output voltage, the second output voltage and the third output voltage and the at least one electronic component 17 are integrated. The skilled person understands that this is a schematic representation and that they do not need to be integrated and can be arranged in the space between the first end surface 10_1 of the housing 10 and the first group 11 of energy source units, the second group 12 of energy source units and the third group 13 of energy source units as separate units depending on the available space and dimensions of the housing 10.

In this embodiment of the present invention each of the first group 11, the second group 12 and the third group 13 comprises a single array (string) 7 of energy storage units. This is shown on the left panel of figure 4 for the first group 11 of energy source units 11_1, 11_2,...,11_n. It is to be noted that the same applies to the second group 12 and the third group 13. Providing a single array 7 within each of the first group 11, the second group 12 and the third group 13, may however, require a long back-to-front electrical connection for connecting the respective groups to the at least one electronic component 17. On the other hand, in some energy storage application may also be possible to arrange a further at least one electronic component 17 at the back end of the battery module 1.

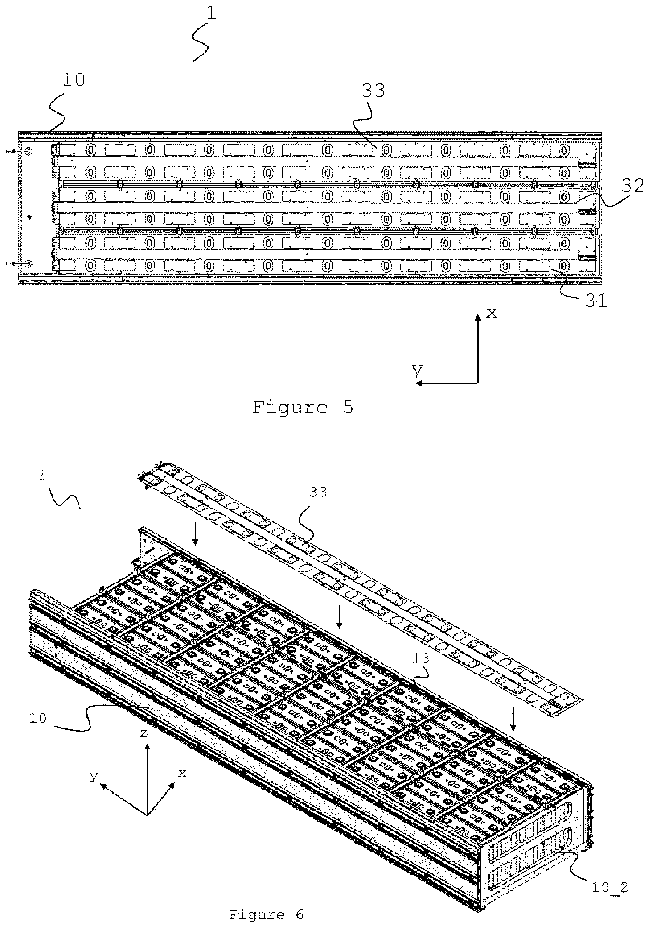

As elaborated above, in each of the first group 11, the second group 12 and the third group 13, the energy sources units 11_1, 11_2,...,11_n, 12_1, 12_2,...12_n, 13_1, 13_2,..., 13_n are connected in series. For this, as shown in figure 5, in an embodiment of the present invention, the battery module 1 comprises further at least one first connection unit 31 arranged above the first group 11 of energy source units 11_1, 11_2, 11_n and extending along the first direction (y direction in figure 5), at least one second connection unit 32 arranged above the second group 12 of energy source units 12_1, 12_2, ...12_n and extending along the first direction, and at least one third connection unit 33 arranged above the third group 13 of energy source units 13_1, 13_2,...13_n and extending along the first direction.

Here, "above" is to be understood arranged in a third direction which is perpendicular to the first direction (y direction) and the second direction (x direction). This is shown in figure 6, which shows an exploded view of the battery module 1 and the third connection unit 33. Even though, for illustrative purposes, only the third connection unit 33 is shown in figure 6, the same applies to the first connection unit 31 and the second connection unit 32. The three arrows show in which direction the third connection unit 33 is to be arranged to be "above" (and hence along the third direction, the z direction in the figure) the third group 13. The word "above" is therefore to be understood to refer to the direction of arrangements of each of the first connection unit 31, second connection unit 32 and third connection unit 33 in the battery module 1.

Each of the first connection unit 31, the second connection unit 32 and the third connection unit 33 may be arranged to be in direct physical contact with the energy source units of the corresponding one of the first group 11, the second group 12 and the third group 13 or may be arranged at a predetermined distance above the energy source units of the corresponding one of the first group 11, the second group 12 and the third group 13 and connected to the energy source units of each of the first group 11, the second group 12 and the third group 13.

Each of the first connection unit 31, the second connection unit 32 and the third connection unit 33 may comprise a plurality of connection elements for connecting the energy source units 11_1, 11_2,...,11_n, 12_1, 12_2,...12_n, 13_1, 13_2,...,13_n of the corresponding one of the first group 11, second group 12 and third group 13.

Each of the first connection unit 31, the second connection unit 32 and the third connection unit 33 may be a single-piece element, for example a single busbar or may be comprised from more than one piece. By way of example, in the embodiment shown in figure 3A, each of the first connection unit 31, the second connection unit 32 and the third connection unit 33 may comprise a first set of busbars for the first array 7 of energy source units (for connecting the energy source units in the first array 7) and a second set of busbars for the second array 8 of energy source units (for connecting the energy source units in the second array 8). In embodiments of the present invention in which in each of the arrays each energy source unit comprises two or more than two energy sources the number of busbars in each set of busbars may be increased for connecting the energy sources. Each of the first connection unit 31, the second connection unit 32 and the third connection unit 33 may comprise wirings and/or one or more sensors, for example voltage sensors and temperature sensors.

In one or more embodiments of the present invention in which each of the first group 11, second group 12 and third group 13 comprises two arrays 7, 8 of energy source units, as it is shown in figure 3A, each of the first connection unit 31, the second connection unit 32 and the third connection unit 33 may comprise a bent part for connecting one energy source unit of the first array 7 to one energy source unit of the second array 8, the one energy source unit of the first array 7 and the one energy source unit of the second array 8 being arranged closest to the second end 10_2 of the housing 10 than the other of the energy source units. In these embodiments of the present invention, each of the first connection unit 31, the second connection unit 32 and the third connection unit 33 may comprise two sets of busbars as elaborated above, one set of busbars for each of the arrays 7, 8, the two sets of busbars being connected with the bent part.

The dimension of the bent part may be arranged to satisfy a condition. The condition may comprise at least one parameter related to the expansion or swelling of the energy source unit in the thickness direction of the energy source unit. By way of example, but without being limiting to the present invention, when the energy source unit is or comprises a prismatic battery cell, the prismatic battery cell having a rectangular form, the prismatic battery cells may be arranged in the battery module 1 such that the thickness direction of each of the prismatic battery cell is along the second direction (x direction in the figures). In other words, for prismatic battery cells arranged as shown in figure 6 (positive and negative contact of each prismatic battery cell being aligned along the y direction), since the prismatic battery cells expand in the thickness direction (x direction), the busbars extending along the first direction (y direction) are arranged not to be affected by the expansion of the prismatic battery cells and only the bent part connecting two busbars as elaborated above should compensate for the expansion of the prismatic battery cells.

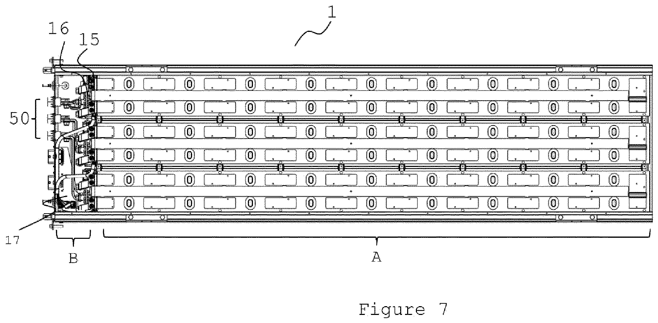

There is shown in figure 7 a top view of the battery module 1 according to an embodiment of the present invention. In this embodiment of the present invention, the first output terminal 15 and the second output terminal 16 for each of the first group 11, the second group 12 and the third group 13 are arranged between the first end surface 10_1 and the respective one of the first group 11 of energy source units, the second group 12 of energy source units and the third group 13 of energy source units. The at least one electronic component 17 is arranged in the space between the first end surface 10_1 and the first group 11 of energy source units, the second group 12 of energy source units and the third group 13 of energy source units. Therefore, the battery module 1 may be seen as comprising an energy storage part A and an electronic unit part B. Six output terminals 50 (three sets of two terminals or in other words three sets of positive and negative terminal) for each of the three electrically independent outputs may be provided on the outer side of the first surface 10_1 of the housing 10, each set of output terminals 50 being connected to the first output terminal 15 and second output terminal 16 of the corresponding one of the first group 11, second group 12 and third group 13. It is to be noted that since figure 7 is a top view of the battery module 1, three output terminals 50 are visible.

A plurality of battery modules 1 may form a battery system 100 for outputting a multilevel output voltage.

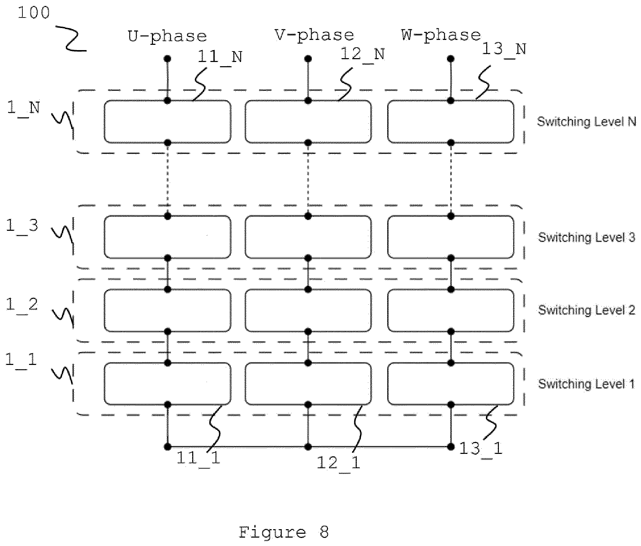

There is shown in figure 8 a battery system 100 according to an embodiment of the present invention for outputting a multilevel output voltage. The battery system 100 comprises N battery modules 1_1, 1_2, 1_3,...,1_N, connected such that each battery module outputs one level of the multilevel output voltage. The battery system 100 comprises further at least one control unit (not shown in the figure). The at least one control unit controls the battery modules 1_1, 1_2, 1_3,...,1_N to output the multilevel output voltage.

Each of the N battery modules 1_1, 1_2, 1_3,...,1_N is a battery module 1 according to the embodiments of the present invention as described above. Hence, each of the battery modules 1_1, 1_2, 1_3,...,1_N comprises a first group 11 of energy source units, a second group 12 of energy source units and a third group 13 of energy source units. Within each of the first group 11, the second group 12 and the third group 13, the energy storage units are electrically connected in series to form a phase cluster11, 12, 13. The voltage built up within a phase cluster 11, 12, 13 of the battery module 1_forms the minimum step voltage of a switching level and the voltage of a phase cluster (for example phase A) of one battery module 1_1 is cumulated with the voltage of the corresponding phase cluster (for example phase A) of another battery module 1_2 in a multi-level inverter architecture in which the battery modules 1_1, 1_2, 1_3,...,1_N are connected. Utilising a common neutral point, each of these phase clusters can provide one of the 3 phase outputs. When connected to phase clusters in any number of other battery modules 1_1, 1_2, 1_3,...,1_N, via the requisite switching architecture, these 3 phases can be used to directly output 3-phase multilevel AC current.

Beyond scalability of the battery module 1 in dimension as described above, the concept of the battery module 1 has other benefits associated with the mechanical integration of prismatic battery cells as energy sources in the energy source units 11_1, 11_2,...11_n, 12_1, 12_2,...12_n, 13_1,13_2,...,13_n. Prismatic battery cells swell or expand in the thickness direction (the direction orthogonal to the alignment direction of the positive and negative contact of the prismatic battery cell) during charge-discharge cycles and also through their lifetime. As such, the structural and electrical connection components must be designed to accommodate this. In the battery module 1 according to the embodiments of the present invention, the effect of prismatic battery cell swelling on the electrical connections is reduced as swelling direction is orthogonal to the major direction of electrical connections, as described above with the first connection unit 31, second connection unit 32 and third connection unit 33, simplifying component design and reducing strength requirements on welded joints, for example.

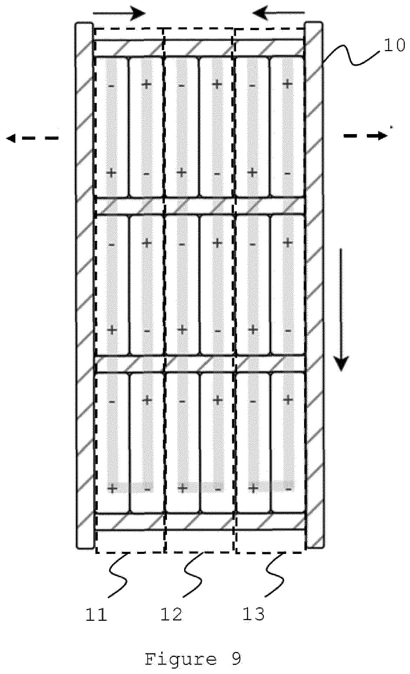

The concept of swelling of the prismatic battery cells in the battery module 1 according to the embodiment of the present invention is shown in figure 9. In the figure, the vertical arrow shows the direction of the electrical connections (the above described first connection unit 31, second connection unit 32 and third connection unit 33). The two dashed horizontal arrows show the direction of prismatic battery cell's swelling. The direction of the electrical connections is orthogonal to the direction of prismatic battery cell's swelling. The two solid horizontal arrows show cell prismatic battery cell's swelling reacted over short span. Structurally, the span over which the swelling forces must be reacted is shorter, which has multiple design and manufacturing benefits for the battery module 1 according to the embodiment of the present invention.

In the following, further details of the battery module 1 according to one or more embodiments of the present invention are described.

Depending on the connection between the energy storage units within each of the first group 11, the second group 12 and the third group 13, it may be required that particular attention is paid to creepage and clearance distance. As elaborated above, full system voltage is achieved by connecting phase clusters of a plurality of battery modules 1_1, 1_2, 1_3,...,1_N in series using switching architecture. Certain failure modes can result in up to twice the system voltage being present between neighbouring phases clusters and energy storage units within a phase cluster. As a result, sufficient creepage and clearance distances must be maintained using insulative materials, spacers, specific geometries and dielectric barriers, depending on the design of the battery module 1 and the connection architecture between the energy storage units.

The effect can be reduced by arraying the energy storage units in a single array 7 and hence building the voltage from the front to the back of the battery module 1 (as shown in figure 4) as opposed to building the voltage in an U-shape as shown in figure 3A. As elaborated above, in the embodiment shown in figure 4, the first output terminal 15 and the second output terminal 16 for each of the phase clusters are arranged at opposite ends of the battery module 1. In the embodiment shown in figure 3A, returning the positive terminal of the phase cluster to be adjacent to negative terminal has, as elaborated above, benefits for service access to the at least one power electronic component and allows enclosures comprising stacked battery modules 1_1, 1_2,...,1_N to be built with a single-sided access and for enclosures to be placed back-to-back as well as side-to-side.

However, a significant challenge in doing this is maintaining creepage and clearance distances at the various interfaces. In embodiments of the present invention, as the one shown in figure 3A, where each phase cluster has energy storage units connected in series such that the first output terminal 15 and the second output terminal 16 are adjacent along the second direction (x direction), full phase voltage is present between adjacent energy source units and requisite creepage and clearance distances must be maintained.

However, when multiple battery modules 1_1, 1_2,...,1_N are connected via a switching architecture, whereby each battery module 1_1, 1_2,...,1_N acts as a single switching level contributing to a larger system AC voltage, there are scenarios where the voltage between phases may reach a level equal to full system voltage or higher. In this situation much larger creepage and clearance distances must be maintained dependant on the pollution degree allowed.

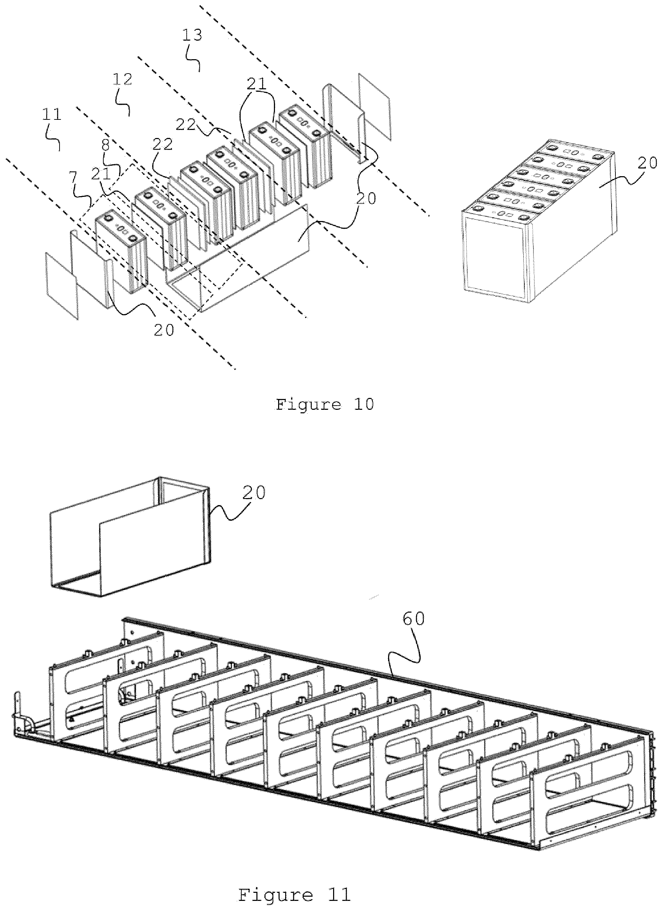

To combat this, and to comply with the mechanical design of the battery module 1 as described above, in one or more embodiments of the present invention, as shown in the left panel in figure 10, the battery module 1 comprises a first spacer element 22 arranged between the first group 11 of energy storage units and the second group 12 of energy storage units, and a second spacer element 22 arranged between the second group 12 of energy storage units and the third group 13 of energy storage units. In the embodiment shown in figure 10, each energy source unit is a prismatic battery cell. Within each of the first group 11, the second group 12 and the third group 13, the prismatic battery cells are arranged in the first array 7 and the second array 8 as elaborated above. Each of the first spacer element 22 and the second spacer element 22 can be a polymer spacer.

The battery module 1 may comprise further a plurality of third spacer elements 21 arranged between the energy source units in each of the first group 11, the second group 12 and the third group 13. Each of the plurality of third spacer elements 21 may comprise one or more compression layers. Each compression pad may adhere to a prismatic battery cell. A plurality of third spacer elements 21 may also be arranged between neighbouring prismatic battery cells of different groups. Each compression layer may be arranged to absorb the prismatic battery cell swelling (expansion) in the thickness direction during the lifetime of the prismatic battery cell. The use of compression layers can be used to meet the required distances between the prismatic battery cells in the battery module 1.

Each of the third spacer element 21 may also comprise a material layer for creepage and clearance reduction. Each of the plurality of third spacer elements 21 can comprise for example a polymer spacer element. The material of each of the plurality of third spacer elements 21 can be chosen based on the number of prismatic battery cells and the number of battery modules 1_1, 1_2,...,1_N connected together. As such, creepage and clearance distances can be tailored depending on the use of the battery module 1 in the energy system without a redesign to the structure of the battery module 1.

In this embodiment of the present invention the plurality of third spacer element 21 are combined with a cell carrier 20 shown in the right panel of figure 10 that provides electrical insulation to mounting and cooling structures.

Each of the first spacer element 22 and the second spacer element 22 may have a larger thickness than each of the third spacer elements 21.

There is shown in figure 11 a cell carrier 20 in one or more embodiments of the present invention. In this embodiment of the present invention, the cell carrier 20 is combined with a metallic structure 60 for accommodating the battery cells in the housing 10 of the battery module 1. This may increase the structural stability of the battery module 1. It is to be noted that the cell carrier 20 is shown as having the front side and the top side open, however, this is only for illustrative purposes. The cell carrier 20 may have the front side closed and, if required also the top side closed. The metallic structure 60 may have all sides closed.

Although detailed embodiments have been described, these only serve to provide a better understanding of the invention defined by the independent claims and are not to be seen as limiting.

## Claims

1. A battery module comprising:
a housing,
a first group of energy source units, wherein the energy source units are arranged in the housing along a first direction and connected in series,
a second group of energy source units, wherein the energy source units are arranged in the housing along the first direction and connected in series
and
a third group of energy source units, wherein the energy source units are arranged in the housing along the first direction and connected in series,
wherein the first group of energy source units is configured to output a first output voltage of the battery module for constituting a first phase of an AC signal,
wherein the second group of energy source units is configured to output a second output voltage of the battery module for constituting a second phase of the AC signal, and
wherein the third group of energy source units is configured to output a third output voltage of the battery module for constituting a third phase of the AC signal.

2. The battery module of claim 1, wherein
the first group of energy source units is arranged adjacent along a second direction to the second group of energy source units and the second group of energy source units is arranged adjacent along the second direction to the third group of energy source units, wherein preferably the second direction is orthogonal to the first direction.

3. The battery module according to any one of claims 1 and 2, wherein the housing has an elongated shape with a first end surface and a second end surface arranged to oppose each other along the first direction, wherein the first direction is along the longitudinal direction of the housing, wherein preferably the housing is a rectangular cuboid housing.

4. The battery module according to any one of claims 1 to 3, wherein a first output terminal and a second output terminal for each of the first output voltage, the second output voltage and the third output voltage is arranged in the housing in the space between the first end surface of the housing and the respective one of the first group of energy source units, the second group of energy source units and the third group of energy source units, wherein preferably the first output terminal and the second output terminal for each of the first output voltage, the second output voltage and the third output voltage are arranged in an alternating manner along the second direction.

5. The battery module of any one of claims 1 to 4,
wherein in each of the first group, the second group and the third group, the plurality of energy source units are arranged in a first array, said first array extending along the first direction and in a second array, said second array extending along the first direction, wherein the first array and the second array are adjacent along the second direction.

6. The battery module according to any one of claims 1 to 5, further comprising at least one first connection unit arranged above the first group of energy source units and extending along the first direction, at least one second connection unit arranged above the second group of energy source units and extending along the first direction, and at least one third connection unit arranged above the third group of energy source units and extending along the first direction,
wherein each of the at least one first connection unit, the at least one second connection unit and the at least one third connection unit comprises a plurality of connection elements for connecting the energy source units of the corresponding one of the first group, second group and third group in series.

7. The battery module according to claim 6, wherein each of the at least one first connection unit, the at least one second connection unit and the at least one third connection unit comprises a bent part for connecting one energy source unit in the first array to one energy source unit of the second array in each of the respective one of the first group, second group and third group, the one energy source unit of the first array and the one energy source unit of the second array being arranged closest to the second end of the housing than the other of the energy source units.

8. The battery module according to claim 7, wherein the dimension of the bent part is arranged to satisfy a condition, said condition comprising at least one parameter related to the expansion of the energy source unit in the thickness direction.

9. The battery module according to any one of claims 1 to 8, further comprising at least one electronic unit
wherein the at least one electronic unit is arranged in the housing in the space between the first end surface and the first group of energy source units, the second group of energy source units and the third group of energy source units.

10. The battery module according to any one of claims 1 to 3, 6 and 8, wherein each of the first output terminal for each of the first output voltage, the second output voltage and the third output voltage is arranged in the housing in the space between the first end surface of the housing and the respective one of the first group of energy units, the second group of energy source units and the third group of energy source units, and each of the second output terminal for each of the first output voltage, the second output voltage and the third output voltage is arranged in the housing in the space between the second end surface of the housing and the and the first group of energy units, the second group of energy source units and the third group of energy source units.

11. The battery module according to any one of claims 1 to 10, wherein in at least one of the first group, the second group and the third group at least one energy source unit comprises at least two energy sources arranged along the second direction.

12. The battery module according to claim 11, wherein the at least two energy sources are connected in parallel.

13. The battery module according to any one of claims 1 to 12, further comprising a first spacer element arranged between the first group and the second group, and a second spacer element arranged between the second group and the third group.

14. The battery module according to any one of claims 1 to 13, further comprising a plurality of third spacer elements arranged between the energy source units in each of the first group, the second group and the third group.

15. The battery module according to any one of claims 1 to 14, further comprising at least one carrier for accommodating one or more of the energy source units in each of the first group, the second group and the third group.

16. A battery system for outputting a multilevel output voltage, the battery system comprising a plurality of battery modules according to claim 1,
wherein the plurality of battery modules are connected such that each battery module outputs one level of the multilevel voltage,
the battery system comprising further
at least one control unit for controlling the plurality of battery modules to output the multilevel output voltage.
